# EUROPEAN PATENT APPLICATION

(11) **EP 4 823 075 A1**
(43) Date of publication of application: **14.10.2026**
(21) Application number: 24900024.1
(22) Date of filing: 09.12.2024
(51) Int. Cl.: H04L 67/55, H04L 51/224

(54) **INFORMATION PUSHING METHOD AND APPARATUS, AND COMPUTER READABLE STORAGE MEDIUM**

(30) Priority: 08.12.2023 CN 202311678661
(71) Applicant: Beijing Zitiao Network Technology Co., Ltd., Beijing 100190 (CN); Lemon Inc., Grand Cayman, KY1-1205 (KY)
(72) Inventor: ZHANG, Min, Beijing 100028 (CN); REN, Shihao, Beijing 100028 (CN); SHI, Qiuyang, singapore 018960 (SG)
(74) Representative: Grünecker Patent- und Rechtsanwälte PartG mbB
(86) International application number: PCT/CN2024/137747
(87) International publication number: WO 2025/119391

(57) **Abstract**

The present invention relates to the field of computer technology, and relates to an information pushing method and apparatus, and a computer readable storage medium. The information pushing method comprises: in response to a target matched with at least one target to be pushed existing in multimedia content to be published by a user, prompting the user to push in the multimedia content the at least one target to be pushed; and in response to the user determining to push the at least one target to be pushed, adding, into the multimedia content, push information of the at least one target to be pushed.

## Description

### CROSS-REFERENCE TO RELATED APPLICATIONS

The present application is based on and claims priority of CN Application No. 202311678661.5, filed on December 08, 2023, the disclosure of which is hereby incorporated by reference in its entirety into the present application.

### TECHNICAL FIELD

The present disclosure relates to the field of computer technologies, and in particular, to an information pushing method, an information pushing apparatus, and a computer-readable storage medium.

### BACKGROUND

Content consumption refers to behavior of a user to acquire and use various digital content on the Internet. The digital content includes text, pictures, audio, video, games, applications, and the like. The digital content may be propagated and distributed through various channels such as Internet platforms, social media, and mobile applications. The user may acquire and use the digital content through subscription, purchase, sharing, commenting, and the like.

With the continuous development of the content consumption industry, content consumption platforms such as short video platforms have gradually developed, and have a large number of active users, producing and consuming massive amounts of native videos every day. Therefore, information pushing using the content consumption platform is widely used in various industries.

In related arts, corresponding video content is produced according to a designated item that needs to be pushed; and the item is pushed to a browsing user by posting the video.

### SUMMARY

According to some embodiments of the present disclosure, an information pushing method is provided, including: in response to the presence of a target matching at least one target to be pushed in multimedia content intended to be posted by a user, prompting the user to push the at least one target to be pushed in the multimedia content; and in response to the user determining to push the at least one target to be pushed, adding push information of the at least one target to be pushed in the multimedia content.

In some embodiments, prompting the user to push the at least one target to be pushed in the multimedia content includes: displaying a prompt control for displaying prompt information of at least one item to be pushed intended to be pushed in the multimedia content.

In some embodiments, the prompt control is configured to display quantity information of the at least one item to be pushed.

In some embodiments, displaying the prompt control includes: in response to the user never pushing a target in the multimedia content, displaying the prompt control in a designated style in a prompt page, the designated style being different from a display style of another control in the prompt page.

In some embodiments, prompting the user to push the at least one target to be pushed in the multimedia content includes: in response to the user performing an interaction operation on the prompt control, displaying related information of the at least one item to be pushed.

In some embodiments, displaying the related information of the at least one item to be pushed includes: in response to the at least one item to be pushed including plurality of items to be pushed, displaying related information of one item to be pushed of the plurality of items to be pushed; and in response to the user wanting to view another item to be pushed of the plurality of items to be pushed, displaying related information of the other item to be pushed.

In some embodiments, the plurality of items to be pushed are sorted according to at least one of a matching degree with the target or item quality, and displaying the related information of the at least one item to be pushed includes: in response to the user performing the interaction operation on the prompt control, determining, according to the sorting, related information of one item to be pushed from the plurality of items to be pushed for display; and in response to the user wanting to view another item to be pushed of the plurality of items to be pushed, displaying, according to the sorting, related information of the other item to be pushed in sequence.

In some embodiments, a push evaluation result of the multimedia content is greater than a threshold, the push evaluation result being determined according to at least one of a matching degree between the at least one target to be pushed and the target or a probability that the multimedia content motivates a browsing user to acquire the at least one target to be pushed.

In some embodiments, the information pushing method further includes: in response to the user determining to push the at least one target to be pushed, displaying an editing interface for the user to edit the push information.

In some embodiments, the push information is displayed in the multimedia content for displaying a related page of the at least one target to be pushed in response to a selection operation of the browsing user of the multimedia content.

In some embodiments, the information pushing method further includes: in response to the user intending to post the multimedia content, identifying, using a machine learning model, whether there is a target matching the at least one target to be pushed in the multimedia content.

In some embodiments, the at least one target to be pushed includes plurality of targets to be pushed, and adding the push information of the at least one target to be pushed in the multimedia content includes: adding, in the multimedia content, push information of a target to be pushed selected by the user from the plurality of targets to be pushed.

In some embodiments, the information pushing method further includes: displaying a setting control for the user to turn on or turn off the prompt of pushing the at least one target to be pushed in the multimedia content.

According to other embodiments of the present disclosure, an information pushing apparatus is provided, including: a prompting unit, configured to prompt a user to push at least one target to be pushed in multimedia content in response to the presence of a target matching the at least one target to be pushed in the multimedia content intended to be posted by the user; and an adding unit, configured to add push information of the at least one target to be pushed in the multimedia content in response to the user determining to push the at least one target to be pushed.

In some embodiments, the prompting unit displays a prompt control for displaying prompt information of at least one item to be pushed intended to be pushed in the multimedia content.

In some embodiments, the prompt control is configured to display quantity information of the at least one item to be pushed.

In some embodiments, the prompting unit, in response to the user never pushing a target in the multimedia content, displays the prompt control in a designated style in a prompt page, the designated style being different from a display style of another control in the prompt page.

In some embodiments, the prompting unit, in response to the user performing an interaction operation on the prompt control, displays related information of the at least one item to be pushed.

In some embodiments, the prompting unit, in response to the at least one item to be pushed including plurality of items to be pushed, displays related information of one item to be pushed of the plurality of items to be pushed; and in response to the user wanting to view another item to be pushed of the plurality of items to be pushed, displays related information of the other item to be pushed.

In some embodiments, the plurality of items to be pushed are sorted according to at least one of a matching degree with the target or item quality, and the prompting unit, in response to the user performing the interaction operation on the prompt control, determines, according to the sorting, related information of one item to be pushed from the plurality of items to be pushed for display; and in response to the user wanting to view another item to be pushed of the plurality of items to be pushed, displays, according to the sorting, related information of the other item to be pushed in sequence.

In some embodiments, a push evaluation result of the multimedia content is greater than a threshold, the push evaluation result being determined according to at least one of a matching degree between the at least one target to be pushed and the target or a probability that the multimedia content motivates a browsing user to acquire the at least one target to be pushed.

In some embodiments, the prompting unit, in response to the user determining to push the at least one target to be pushed, displays an editing interface for the user to edit the push information.

In some embodiments, the push information is displayed in the multimedia content for displaying a related page of the at least one target to be pushed in response to a selection operation of the browsing user of the multimedia content.

In some embodiments, the prompting unit, in response to the user intending to post the multimedia content, identifies, using a machine learning model, whether there is a target matching the at least one target to be pushed in the multimedia content.

In some embodiments, the at least one target to be pushed includes plurality of targets to be pushed, and the adding unit adds, in the multimedia content, push information of a target to be pushed selected by the user from the plurality of targets to be pushed.

In some embodiments, the prompting unit displays a setting control for the user to turn on or turn off the prompt of pushing the at least one target to be pushed in the multimedia content.

According to still other embodiments of the present disclosure, an information pushing apparatus is provided, including: a memory; and a processor coupled to the memory, the processor being configured to, based on instructions stored in the memory apparatus, execute the information pushing method in any one of the preceding embodiments.

According to yet other embodiments of the present disclosure, a computer-readable storage medium is provided, having a computer program stored thereon, where the information pushing method in any one of the preceding embodiments is implemented when the program is executed by a processor.

According to yet other embodiments of the present disclosure, a computer program product is provided, including instructions that, when executed by a processor, cause the processor to execute the information pushing method in any one of the preceding embodiments.

### BRIEF DESCRIPTION OF THE DRAWINGS

The drawings, which constitute a part of the specification, illustrate embodiments of the present disclosure and, together with the description, serve to explain the principles of the present disclosure.

The present disclosure may be understood more clearly according to the following detailed description with reference to the drawings:
Fig. 1 shows a flowchart of some embodiments of an information pushing method of the present disclosure;
Fig. 2a shows a schematic diagram of some embodiments of a content editing page of the present disclosure;
Figs. 2b-2c show schematic diagrams of some embodiments of a prompt page of the present disclosure;
Figs. 2d-2e show schematic diagrams of some embodiments of a target selection page of the present disclosure;
Fig. 2f shows a schematic diagram of some embodiments of a link setting page of the present disclosure;
Fig. 2g shows a schematic diagram of some embodiments of a confirmation pop-up window of the present disclosure;
Fig. 2h shows a schematic diagram of some embodiments of an editing page of the present disclosure;
Fig. 2i shows a schematic diagram of other embodiments of the prompt page of the present disclosure;
Fig. 2j shows a schematic diagram of some embodiments of a multimedia content display page of the present disclosure;
Fig. 3 shows a schematic diagram of some embodiments of the information pushing method of the present disclosure;
Fig. 4 shows a block diagram of some embodiments of an information pushing apparatus of the present disclosure;
Fig. 5 shows a block diagram of other embodiments of the information pushing apparatus of the present disclosure;
Fig. 6 shows a block diagram of still other embodiments of the information pushing apparatus of the present disclosure.

### DETAILED DESCRIPTION

Various exemplary embodiments of the present disclosure will now be described in detail with reference to the drawings. It should be noted that relative arrangements of components and steps, numerical expressions, and numerical values set forth in these embodiments do not limit the scope of the present disclosure unless otherwise specifically stated.

Meanwhile, it should be understood that, for ease of description, the dimensions of various parts shown in the drawings are not drawn to their actual proportional relationship.

The following description of at least one exemplary embodiment is merely illustrative in nature and is in no way intended to limit the present disclosure and its application or use.

Technologies, methods, and devices known to those of ordinary skill in the relevant art may not be discussed in detail, but the technologies, methods, and devices should be considered as part of the specification when appropriate.

In all examples shown and discussed herein, any specific value should be construed as being merely exemplary, rather than limiting. Therefore, other examples of the exemplary embodiment may have different values.

It should be noted that similar reference numerals and letters represent similar items in the following drawings, and thus, once an item is defined in one drawing, it does not need to be further discussed in subsequent drawings.

The inventors of the present disclosure have found the following problem in the preceding related arts: the efficiency of information pushing is reduced due to the failure to take advantage of the quantity advantage of native multimedia content.

In view of this, the present disclosure provides an information pushing technical solution, which may improve the efficiency of information pushing.

As mentioned above, the association between multimedia content and a target to be pushed is mainly performed manually. A provider of an item or service or an initiator of information promotion invites a creator to produce a promotion video for the item or service; and adds a related link of the item or service in the promotion video. According to experimental tests, a large amount of published UGC (User Generated Content) may be matched with at least one item or service to be recommended. The published UGC is not specially created for these items or services to be recommended, that is, it is non-information push content, but has great information pushing potential. However, the preceding pushing manner does not associate these UGC with the items or services to be recommended for the browsing user to perform an acquisition operation on these items or services, resulting in a decrease in the efficiency of information pushing.

To solve the preceding technical problem, the technical solution of the present disclosure may automatically identify fresh and creative UGC content matching a target to be pushed, and mount an anchor for acquiring the target to be pushed in the UGC content, so as to expand the supply of carriers of push information, thereby improving the efficiency of information pushing.

The browsing user often shows interest in an item that appears in a non-information push video. The non-information push video does not include an item anchor and link information, and the browsing user may only take a screenshot of the video and search on other item acquisition platforms, making the operation process cumbersome and causing low information pushing efficiency. Therefore, it is necessary to build a more streamlined solution for the browsing user to express the intention of acquiring the item, and complete the item acquisition in a case where the browsing user generates interest, thereby improving the efficiency of information pushing.

In addition, interaction data of the browsing user for the non-information push video often reflects user interest. The use of such interaction data helps to more accurately recommend an information push video to a new user, so as to increase the probability of the user acquiring the item and quickly pass cold start.

In an item recommendation scenario, cold start of a new user (a user who has never performed an item acquisition behavior) has always been a problem in information pushing due to the lack of user-side information and low accuracy. For these users, their behavioral data is even more important because the behavior of the user better reflects the real interest of the user.

Based on this, it is necessary to mine behavioral preferences of users for multimedia content, so as to obtain interests of the users in items based on feedback of the users on the content. The multimedia content has a huge magnitude, and it is particularly important to identify content that can reflect user intentions from the multimedia content.

The mid-tailed and long-tailed creators of multimedia content contribute a large amount of VV (Video View). How to improve the probability of these creators posting multimedia content and continuously motivate these creators to post content that can promote items or services is a key technical problem.

Factors that hinder these creators from posting content include the following points: there are many preconditions for posting content, and before posting the content, it is necessary to rely on the selection and samples of recommended items, and other links, which limits the overall content submission scale and path conversion efficiency; the pre-selection and sample scenarios are disjointed from the posting scenario, and the creators do not know that they need to submit contributions in the next step after selecting products, or forget to submit contributions after leaving the product selection scenario; the awareness of push information is weak, especially among new creators, who unconsciously or forget to add push information when posting, resulting in the failure of the produced video to be converted into information push content; the cost of acquiring additional content and samples is high, requiring additional time and energy for content creation and sample acquisition; and negative impacts mainly focus on the too strong information pushing intention of the posted content.

To solve the preceding technical problem, the present disclosure may automatically recommend a matched item based on video content in response to a user submitting contributions in a poster of a multimedia content posting platform, and prompt the user to add push information in the video, so as to increase the scale of information push content, thereby improving the efficiency of information pushing.

In this way, the multimedia content matching the target to be pushed may be automatically identified, product selection and posting may be completed on a posting page without scenario switching and additional content production costs, thereby shortening the cycle of multimedia content submission; non-mature authors may be helped by automatic recommendation to reduce product selection costs, thereby improving the activity of posting recommendation content; information push videos with a strong information pushing intention easily arouse disgust of the browsing user, and non-information push videos added with push information have a weak information pushing intention, which may improve information pushing efficiency.

For example, the technical solution of the present disclosure may be implemented through embodiments below.

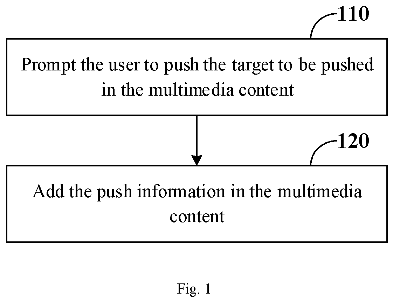

Fig. 1 shows a flowchart of some embodiments of an information pushing method of the present disclosure.

As shown in Fig. 1, in step 110, in response to the presence of a target matching at least one target to be pushed in multimedia content intended to be posted by a user, the user is prompted to push the at least one target to be pushed in the multimedia content.

For example, the multimedia content may include a video, an image, text, an audio, or the like. The target in the multimedia content includes an item that appears in the multimedia content, a plot in the multimedia content, or the like. The target to be pushed includes an item to be pushed, a service to be pushed, or the like.

In some embodiments, in response to the user intending to post the multimedia content, a machine learning model (such as a target recognition model capable of implementing target recognition) is used to recognize whether there is a target matching the at least one target to be pushed in the multimedia content. For example, the target recognition model is called through a backend service to match a suitable item for the video uploaded by the user.

For example, conditions for triggering the calling of the target recognition model include: the user clicks a triggering control (such as a "next" control) on a content editing page; the user has an information pushing permission authorized by a target provider; and no push information of any target to be pushed is added to the current multimedia content.

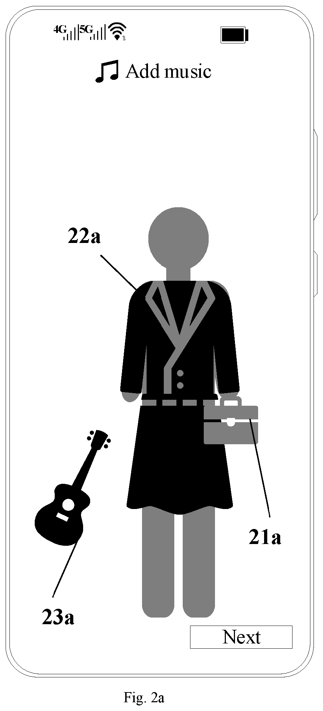

For example, the target to be pushed includes a handbag, a skirt, a trumpet, or the like. The configuration of the content editing page may be implemented through the embodiments in Fig. 2a.

Fig. 2a shows a schematic diagram of some embodiments of a content editing page of the present disclosure.

As shown in Fig. 2a, in response to the user uploading a video intended to be posted on the content editing page, the target recognition model is called to recognize that targets therein capable of matching the targets to be pushed above include a handbag 21a, a skirt 22a, and a guitar 23a. The handbag and the handbag 21a, and the skirt and the skirt 22a belong to the same kind of items, and the trumpet and the guitar 23a belong to similar items (both belong to musical instruments).

For example, in response to the user clicking a "next" control on the content editing page, the prompt information of the item to be pushed may be displayed.

In some embodiments, a prompt control is displayed for displaying prompt information of at least one item to be pushed intended to be pushed in the multimedia content. For example, the prompt control is configured to display quantity information of the at least one item to be pushed.

In some embodiments, a push evaluation result of the multimedia content is greater than a threshold, the push evaluation result being determined according to at least one of a matching degree between the at least one target to be pushed and the target or a probability that the multimedia content motivates a browsing user to acquire the at least one target to be pushed. For example, a machine learning model or a mathematical model may be used to calculate the push evaluation result.

For example, the higher the matching degree between the target to be pushed and the target, the higher the value of the push evaluation result; and the higher the probability that the multimedia content motivates the browsing user to acquire the at least one target to be pushed, the higher the value of the push evaluation result.

For example, the probability that the multimedia content motivates the browsing user to acquire the at least one target to be pushed may be determined according to an information pushing intention (positively correlated) of the multimedia content, the quality (positively correlated) of the multimedia content, or the like.

For example, conditions for triggering the display of the prompt control include: the user has an information pushing permission authorized by a target provider; the target provider may currently provide the target to be pushed (for example, the inventory quantity of an item is greater than or equal to 1); and the push evaluation result is greater than the threshold.

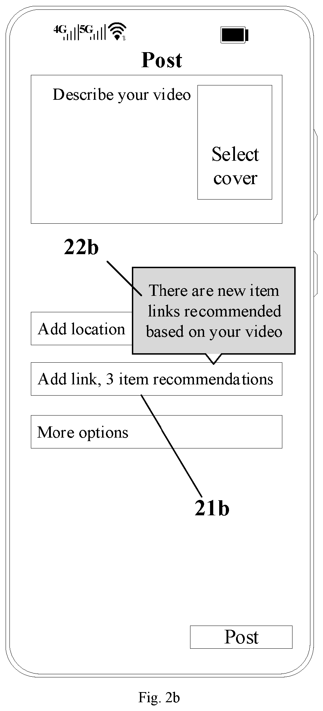

For example, the prompt information of the target to be pushed may be displayed in a first prompt page through the embodiments in Fig. 2b.

FIGS. 2b-2c show schematic diagrams of some embodiments of a prompt page of the present disclosure.

As shown in Fig. 2b, in response to the user clicking the "next" control on the content editing page, the prompt page may be displayed. The first prompt page may include a video description editing area for editing description information of the video; and a video cover may also be uploaded in the video description editing area by clicking a "select cover" control, and a thumbnail of the cover is displayed in the "select cover" control.

The prompt control 21b may be displayed on the first prompt page. For example, the number of matched items to be pushed may be displayed on the prompt control 21b.

In some embodiments, displaying the prompt control includes: in response to the user never pushing a target in the multimedia content, displaying the prompt control in a designated style in the first prompt page, the designated style being different from a display style of another control in the prompt page. For example, a bubble text 22b may be used to prompt the user to add the push information for the first time; or the fill color of the prompt control 21b may be changed to a different color from the other controls on the prompt page to prompt the user to add the push information for the first time.

In some embodiments, in response to the user performing an interaction operation on the prompt control, related information of the at least one item to be pushed is displayed. For example, before entering a related information display page, a second prompt page may be entered first, and then the related information is displayed through interaction with the second prompt page.

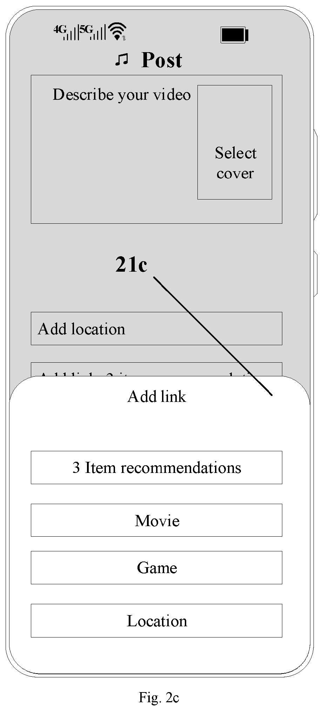

For example, the second prompt page in Fig. 2c may be entered by clicking an "add link, 3 item recommendations" control on the first prompt page. In addition to the control for adding the recommendation information, the second prompt page may also include a control for adding other links, thereby improving the quality of the multimedia content.

As shown in Fig. 2c, the second prompt page 21c may be displayed on the first prompt page. In the case where the second prompt page 21c is displayed, the style of the first prompt page may be changed to highlight the second prompt page 21c, such as reducing the brightness of the first prompt page.

In addition to displaying a "3 item recommendations" control for adding recommendation information of items, the second prompt page 21c may further include controls for adding other links such as a "movie", a "game", and a "location" for the user to select, thereby improving the quality of the multimedia content.

For example, in response to the user performing a selection operation on the "3 item recommendations" control, the related information of the at least one item to be pushed is displayed.

In some embodiments, in response to the at least one item to be pushed including plurality of items to be pushed, related information of one item to be pushed of the plurality of items to be pushed is displayed; and in response to the user wanting to view another item to be pushed of the plurality of items to be pushed, related information of the other item to be pushed is displayed.

In some embodiments, the related information of the target to be pushed may be displayed in the target selection page. For example, an entrance to the target selection page may also be provided at the top of the prompt page (such as below a page title, etc.).

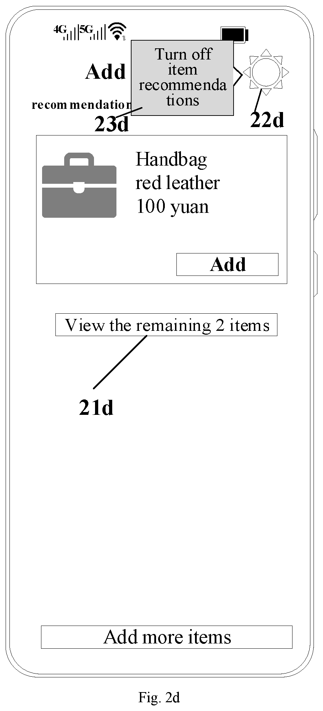

For example, the related information of the target to be pushed may be displayed in the target selection page through the embodiments in FIGS. 2d-2h.

FIGS. 2d-2e show schematic diagrams of some embodiments of a target selection page of the present disclosure.

As shown in Fig. 2d, the related information of only one target to be pushed, including an image, a name, an attribute, or the like of the target, is displayed by default in the target selection page. For example, only the related information of the handbag is displayed by default.

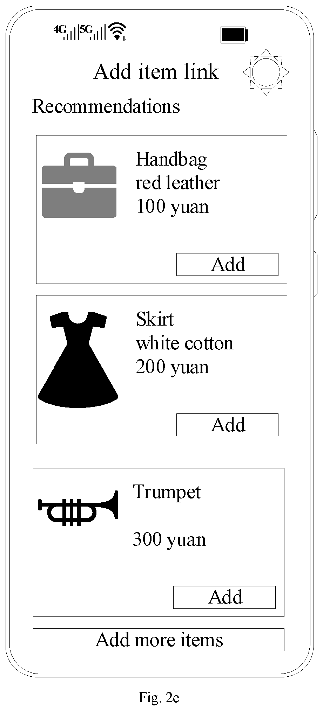

As shown in Fig. 2e, in response to the user clicking a "view the remaining 2 items" control, the related information of the skirt and the trumpet is displayed in a list manner.

For example, in response to the user clicking on an area where the related information of the item is located, a detail page of the item is switched to. A link to the detail page of the item may also be added to the current multimedia content.

In some embodiments, the number of items that the user may add may be determined according to user permission. For example, the user may only add one item. After the user clicks an adding control of the handbag, the control becomes an added state, and adding controls of other items become disabled states (prompt information "only one item may be added, please deselect first" may be displayed); and in response to the user clicking the adding control again, the added state of the adding control is cancelled, and the disabled states of other adding controls are cancelled.

In some embodiments, the plurality of items to be pushed are sorted according to at least one of a matching degree with the target or item quality. In response to the user performing the interaction operation on the prompt control, related information of one item to be pushed is determined from the plurality of items to be pushed according to the sorting for display; and in response to the user wanting to view another item to be pushed of the plurality of items to be pushed, related information of the other item to be pushed is displayed in sequence according to the sorting.

An "add more items" control may also be displayed in the target selection page; and in response to the user selecting the "add more items" control, other items that may be added to the current multimedia content are displayed.

For example, as mentioned above, the handbag and the handbag 21a have the same item type, attribute, etc., and have the highest matching degree; the skirt and the skirt 22a have the same item type, but different attributes (such as different styles), and have the second highest matching degree; and the trumpet and the guitar 23a belong to the same instrument type but different instrument varieties, and have the lowest matching degree. In this case, only the related information of the handbag is displayed by default, and the related information of the skirt and the trumpet is temporarily hidden.

In this way, the information with the highest push success rate may be highlighted, and whether to display other information is then determined according to the user intention, thereby improving the efficiency of information pushing.

As shown in Fig. 2d, a setting control 22d may be displayed for the user to turn on or turn off the prompt of pushing the at least one target to be pushed in the multimedia content, such as "turn off item recommendations".

For example, in response to the user never pushing a target in the multimedia content, the setting control 22d is displayed in a designated style, the designated style being different from the display styles of other controls in the prompt page. For example, a user who adds push information for the first time may be prompted to turn off the recommendations through a bubble text 23d; or the fill color of the setting control 22d may be changed to a different color from other controls on the prompt page.

In response to the user clicking the setting control 22d, the link setting page may be displayed.

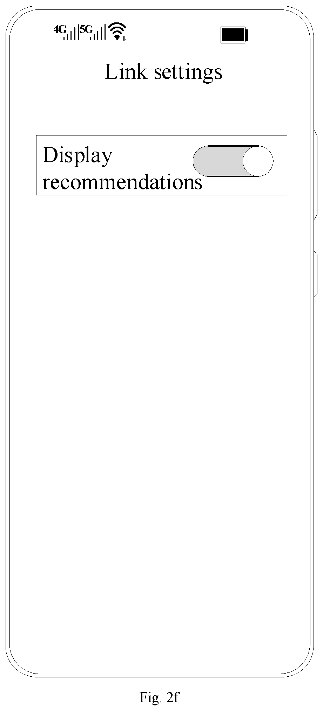

Fig. 2f shows a schematic diagram of some embodiments of a link setting page of the present disclosure.

As shown in Fig. 2f, the link setting page includes a control for turning off or turning on the recommendations.

In some embodiments, after the user clicks an "add" control in the target selection page, it is confirmed to add the push information of the corresponding target to be pushed to the current multimedia content.

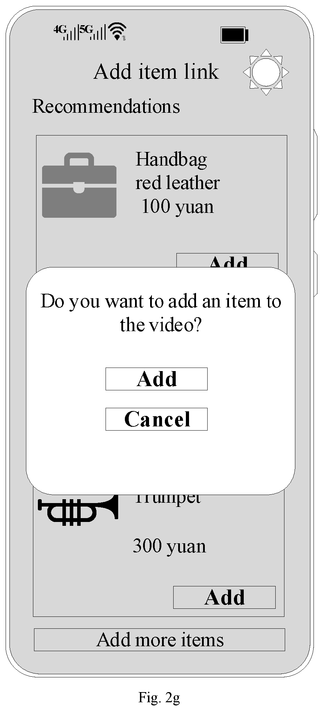

Fig. 2g shows a schematic diagram of some embodiments of a confirmation pop-up window of the present disclosure.

As shown in Fig. 2g, after clicking the "add" control in the target selection page, the confirmation pop-up window may also be displayed; and the "add" control in the confirmation pop-up window is clicked again to confirm the addition of the push information, and the editing page of the anchor is entered. In this way, the probability of an incorrect operation may be reduced, thereby improving the efficiency of information pushing.

After confirming the addition of the push information of the target to be pushed, the information pushing may be continued through step 120 in Fig. 1.

In step 120, in response to the user determining to push the at least one target to be pushed, the push information of the at least one target to be pushed is added in the multimedia content.

In the preceding embodiments, the target to be pushed is used to match the native multimedia content intended to be posted by the user, and the push information is added to the matched native multimedia content. In this way, the quantity advantage of the native multimedia content may be utilized to improve the efficiency of information pushing.

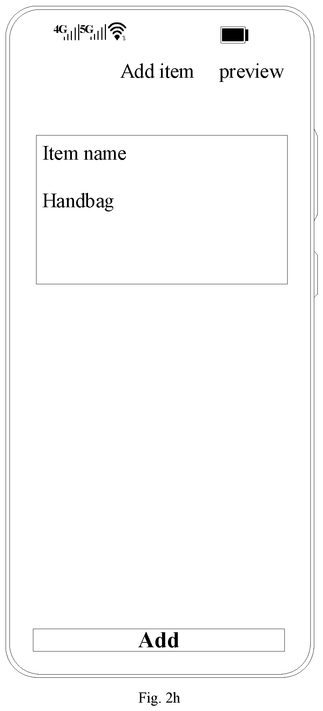

In some embodiments, in response to the user determining to push the at least one target to be pushed, the editing interface is displayed for the user to edit the push information. For example, the push information may be edited through the embodiments in Fig. 2h.

Fig. 2h shows a schematic diagram of some embodiments of an editing page of the present disclosure.

As shown in Fig. 2h, the push information may be edited in an information editing area of the editing page. For example, a name, an attribute, a recommendation word, or the like of the recommended item may be added here.

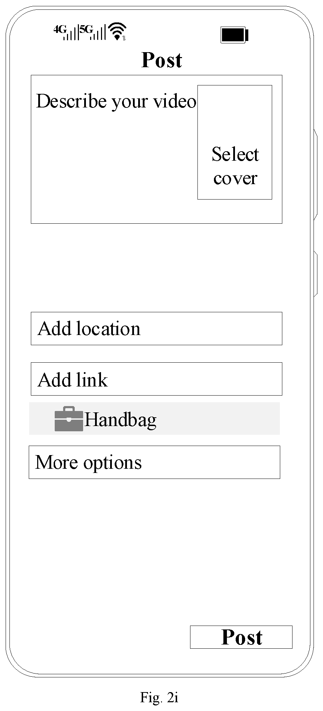

For example, in response to the user clicking an "add" control in the editing page, the prompt page is switched to, and a prompt of the added target to be pushed is displayed in the prompt page. For example, the prompt of the added target to be pushed may be displayed through the embodiments in Fig. 2i.

Fig. 2i shows a schematic diagram of other embodiments of a prompt page of the present disclosure.

As shown in Fig. 2i, in response to the user clicking the "add" control in the editing page, the prompt page is switched to, and the prompt of the added target to be pushed, such as a "handbag", is displayed in the prompt page near an "add link" control.

For example, in response to the user clicking a "post" control, the multimedia content added with the push information is posted.

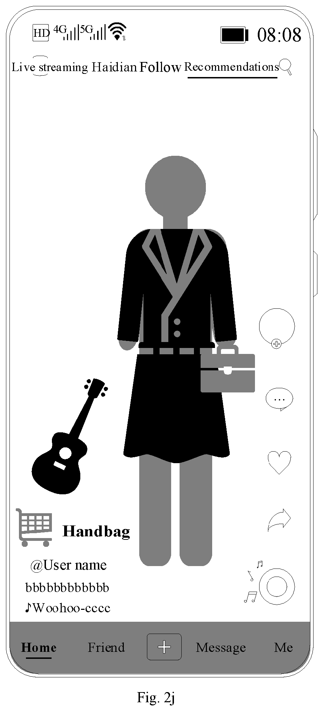

In some embodiments, the at least one target to be pushed includes plurality of targets to be pushed. The push information of a target to be pushed selected by the user from the plurality of targets to be pushed is added in the multimedia content. For example, the multimedia content may be displayed through the embodiments in Fig. 2j.

Fig. 2j shows a schematic diagram of some embodiments of a multimedia content display page of the present disclosure.

As shown in Fig. 2j, the related information of the added target to be pushed is displayed in the multimedia content. For example, the name "handbag" of the target to be pushed may be displayed on the screen, and its related attributes may also be displayed; and a shopping cart icon may also be displayed for prompting the user to click to acquire the handbag.

In some embodiments, the push information is displayed in the multimedia content for displaying a related page of the at least one target to be pushed in response to a selection operation of a browsing user of the multimedia content.

For example, in response to the user clicking on a "handbag" control or the shopping cart icon, an item detail page of the handbag is switched to, so that the user may acquire the handbag.

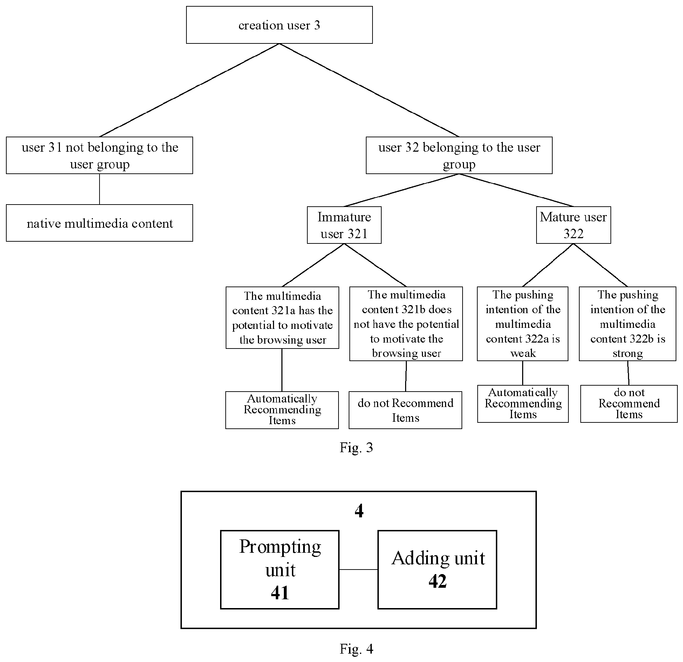

In some embodiments, it may be determined through the embodiments in Fig. 3 whether to trigger to prompt the user to push the target in the multimedia content.

Fig. 3 shows a schematic diagram of some embodiments of an information pushing method of the present disclosure.

As shown in Fig. 3, a user group may be preset, and only in response to a user 32 belonging to the user group intending to post the multimedia content, the user may be prompted to make recommendations; and a user 31 who does not belong to the user group is not prompted to make recommendations. For an immature user 321 in the group (such as the number of followers being less than a threshold, the number of posted content being less than a threshold, etc.), in the case where the current multimedia content 321a has the potential to motivate browsing users, the user is triggered to make recommendations; and in the case where the current multimedia content 321b does not have the potential to motivate browsing users, the user is not triggered to make recommendations. The potential may be determined using a machine learning model or a mathematical model according to factors such as the content quality of the current multimedia content.

For a mature user 322 in the group (such as the number of followers being greater than or equal to a threshold, the number of posted content being greater than or equal to a threshold, etc.), in the case where a pushing intention of the current multimedia content 322a is weaker than the threshold, the user is triggered to make recommendations; and in the case where the pushing intention of the current multimedia content 322b is not weaker than the threshold, the user is not triggered to make recommendations. The pushing intention may be determined using a machine learning model or a mathematical model according to the content of the current multimedia content.

In this way, the multimedia content suitable for information pushing may be selected, so as to trigger the corresponding prompt for the user, thereby improving the efficiency of information pushing.

Fig. 4 shows a block diagram of some embodiments of an information pushing apparatus of the present disclosure.

As shown in Fig. 4, the information pushing apparatus 4 includes: a prompting unit 41, configured to prompt a user to push at least one target to be pushed in multimedia content in response to the presence of a target matching the at least one target to be pushed in the multimedia content intended to be posted by the user; and an adding unit 42, configured to add push information of the at least one target to be pushed in the multimedia content in response to the user determining to push the at least one target to be pushed.

In some embodiments, the prompting unit 41 displays a prompt control for displaying prompt information of at least one item to be pushed intended to be pushed in the multimedia content.

In some embodiments, the prompt control is configured to display quantity information of the at least one item to be pushed.

In some embodiments, the prompting unit 41, in response to the user never pushing a target in the multimedia content, displays the prompt control in a designated style in a prompt page, the designated style being different from a display style of another control in the prompt page.

In some embodiments, the prompting unit 41, in response to the user performing an interaction operation on the prompt control, displays related information of the at least one item to be pushed.

In some embodiments, the prompting unit 41, in response to the at least one item to be pushed including plurality of items to be pushed, displays related information of one item to be pushed of the plurality of items to be pushed; and in response to the user wanting to view another item to be pushed of the plurality of items to be pushed, displays related information of the other item to be pushed.

In some embodiments, the plurality of items to be pushed are sorted according to at least one of a matching degree with the target or item quality, and the prompting unit, in response to the user performing the interaction operation on the prompt control, determines, according to the sorting, related information of one item to be pushed from the plurality of items to be pushed for display; and in response to the user wanting to view another item to be pushed of the plurality of items to be pushed, displays, according to the sorting, related information of the other item to be pushed in sequence.

In some embodiments, a push evaluation result of the multimedia content is greater than a threshold, the push evaluation result being determined according to at least one of a matching degree between the at least one target to be pushed and the target or a probability that the multimedia content motivates a browsing user to acquire the at least one target to be pushed.

In some embodiments, the prompting unit 41, in response to the user determining to push the at least one target to be pushed, displays an editing interface for the user to edit the push information.

In some embodiments, the push information is displayed in the multimedia content for displaying a related page of the at least one target to be pushed in response to a selection operation of the browsing user of the multimedia content.

In some embodiments, the prompting unit 41, in response to the user intending to post the multimedia content, identifies, using a machine learning model, whether there is a target matching the at least one target to be pushed in the multimedia content.

In some embodiments, the at least one target to be pushed includes plurality of targets to be pushed, and the adding unit 42 adds, in the multimedia content, push information of a target to be pushed selected by the user from the plurality of targets to be pushed.

In some embodiments, the prompting unit 41 displays a setting control for the user to turn on or turn off the prompt of pushing the at least one target to be pushed in the multimedia content.

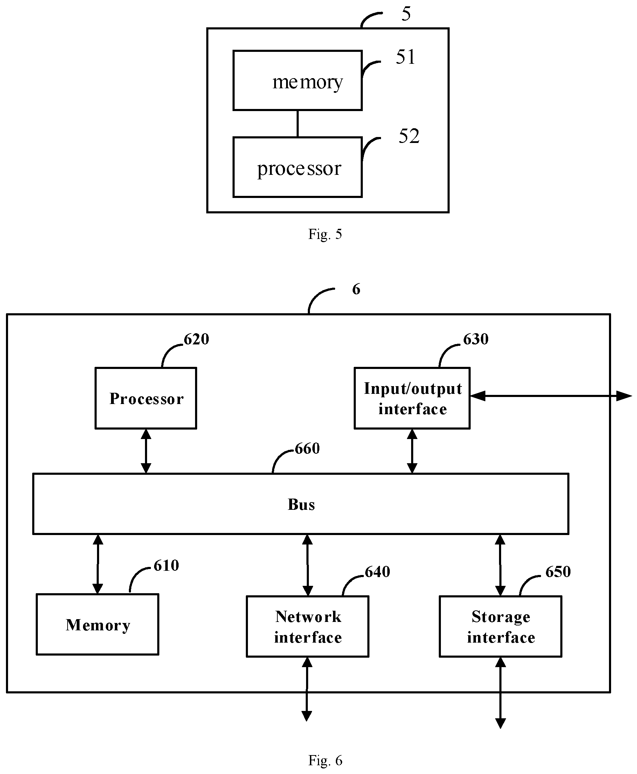

Fig. 5 shows a block diagram of other embodiments of an information pushing apparatus of the present disclosure.

As shown in Fig. 5, the information pushing apparatus 5 of this embodiment includes: a memory 51 and a processor 52 coupled to the memory 51, the processor 52 being configured to, based on instructions stored in the memory 51, execute the information pushing method in any one of the embodiments of the present disclosure.

The memory 51 may include, for example, a system memory, a fixed non-volatile memory medium, or the like. The system memory stores, for example, an operating system, an application, a boot loader, a database, other programs, or the like.

Fig. 6 shows a block diagram of still other embodiments of an information pushing apparatus of the present disclosure.

As shown in Fig. 6, the information pushing apparatus 6 of this embodiment includes: a memory 610 and a processor 620 coupled to the memory 610, the processor 620 being configured to, based on instructions stored in the memory 610, execute the information pushing method in any one of the preceding embodiments.

The memory 610 may include, for example, a system memory, a fixed non-volatile memory medium, or the like. The system memory stores, for example, an operating system, an application, a boot loader, other programs, or the like.

The information pushing apparatus 6 may further include an input/output interface 630, a network interface 640, a storage interface 650, or the like. These interfaces 630, 640, 650 and the memory 610 and the processor 620 may be connected, for example, through a bus 660. The input/output interface 630 provides a connection interface for input/output devices such as a display, a mouse, a keyboard, a touch screen, a microphone, and a speaker. The network interface 640 provides a connection interface for various networked devices. The storage interface 650 provides a connection interface for external storage devices such as an SD card and a USB flash disk.

Those skilled in the art should understand that the embodiments of the present disclosure may be provided as a method, a system, or a computer program product. Therefore, the present disclosure may take the form of an entirely hardware embodiment, an entirely software embodiment, or an embodiment containing both hardware and software elements. Moreover, the present disclosure may take the form of a computer program product embodied on one or more computer-usable non-transitory storage media having computer-usable program code embodied therein, including but not limited to a disk memory, a CD-ROM, an optical memory, or the like.

Thus, the information pushing method, the information pushing apparatus, and the computer-readable storage medium according to the present disclosure have been described in detail. Some details known in the art are not described to avoid obscuring the concept of the present disclosure. Those skilled in the art may fully understand how to implement the technical solutions disclosed herein based on the preceding description.

The method and system of the present disclosure may be implemented in many ways. For example, the method and system of the present disclosure may be implemented by software, hardware, firmware, or any combination of software, hardware, and firmware. The preceding sequence of steps for the method is for illustration only, and the steps of the method of the present disclosure are not limited to the sequence specifically described above, unless specifically stated otherwise. In addition, in some embodiments, the present disclosure may also be implemented as programs recorded in a recording medium, where these programs include machine-readable instructions for implementing the method according to the present disclosure. Therefore, the present disclosure also covers a recording medium storing programs for performing the method according to the present disclosure.

Although some specific embodiments of the present disclosure have been described in detail by way of example, those skilled in the art should understand that the preceding examples are for illustration only, rather than limiting the scope of the present disclosure. Those skilled in the art should understand that the preceding embodiments may be modified without departing from the scope and spirit of the present disclosure. The scope of the present disclosure is defined by the appended claims.

## Claims

1. An information pushing method, comprising:
prompting a user to push at least one target to be pushed in multimedia content, in response to presence of a target matching the at least one target to be pushed in the multimedia content intended to be posted by the user; and
adding push information of the at least one target to be pushed in the multimedia content, in response to the user determining to push the at least one target to be pushed.

2. The information pushing method of claim 1, wherein the prompting the user to push the at least one target to be pushed in the multimedia content comprises:
displaying a prompt control for displaying prompt information of the at least one item to be pushed intended to be pushed in the multimedia content.

3. The information pushing method of claim 2, wherein the prompt control is configured to display quantity information of the at least one item to be pushed.

4. The information pushing method of claim 2 or 3, wherein the displaying the prompt control comprises:
displaying the prompt control in a designated style in a prompt page, in response to the user never pushing a target in the multimedia content, the designated style being different from a display style of another control in the prompt page.

5. The information pushing method of any of claims 2-4, wherein the prompting the user to push the at least one target to be pushed in the multimedia content comprises:
displaying related information of the at least one item to be pushed, in response to the user performing an interaction operation on the prompt control.

6. The information pushing method of claim 5, wherein the displaying the related information of the at least one item to be pushed comprises:
plurality of displaying related information of one item to be pushed of a plurality of items to be pushed, in response to the at least one item to be pushed comprising the plurality of items to be pushed; and
displaying related information of another item to be pushed, in response to the user wanting to view the other item to be pushed of the plurality of items to be pushed.

7. The information pushing method of claim 6, wherein the plurality of plurality of items to be pushed are sorted according to at least one of a matching degree with the target or item quality, and
the displaying the related information of the at least one item to be pushed comprises:
determining, according to the sorting, related information of one item to be pushed from the plurality of items to be pushed for display, in response to the user performing the interaction operation on the prompt control; and
displaying, according to the sorting, the related information of the other item to be pushed in sequence, in response to the user wanting to view the other item to be pushed of the plurality of items to be pushed.

8. The information pushing method of any of claims 1-7, wherein a push evaluation result of the multimedia content is greater than a threshold, the push evaluation result being determined according to at least one of a matching degree between the at least one target to be pushed and the target or a probability that the multimedia content motivates a browsing user to acquire the at least one target to be pushed.

9. The information pushing method of any of claims 1-8, further comprising:
displaying an editing interface for the user to edit the push information, in response to the user determining to push the at least one target to be pushed.

10. The information pushing method of any of claims 1-9, wherein the push information is displayed in the multimedia content for displaying a related page of the at least one target to be pushed in response to a selection operation of a browsing user of the multimedia content.

11. The information pushing method of any of claims 1-10, further comprising:
identifying, using a machine learning model, whether there is the target matching the at least one target to be pushed in the multimedia content, in response to the user intending to post the multimedia content.

12. The information pushing method of any of claims 1-11, wherein the at least one target to be pushed comprises a plurality of targets to be pushed, and
the adding the push information of the at least one target to be pushed in the multimedia content comprises:
adding, in the multimedia content, push information of a target to be pushed selected by the user from the plurality of targets to be pushed.

13. The information pushing method of any of claims 1-12, further comprising:
displaying a setting control for the user to turn on or turn off a prompt of pushing the at least one target to be pushed in the multimedia content.

14. An information pushing apparatus, comprising:
a prompting unit, configured to prompt a user to push at least one target to be pushed in multimedia content in response to presence of a target matching the at least one target to be pushed in the multimedia content intended to be posted by the user; and
an adding unit, configured to add push information of the at least one target to be pushed in the multimedia content in response to the user determining to push the at least one target to be pushed.

15. An information pushing apparatus, comprising:
a memory; and
a processor coupled to the memory, the processor being configured to, based on instructions stored in the memory, execute an information pushing method of any of claims 1-13.

16. A computer-readable storage medium having a computer program stored thereon, wherein an information pushing method of any of claims 1-13 is implemented when the program is executed by a processor.

17. A computer program product, comprising instructions that, when executed by a processor, cause the processor to execute an information pushing method of any of claims 1-13.
